(19) Europäisches Patentamt / European Patent Office / Office européen des brevets

(11) **EP 3 517 846 B1**

(12) **EUROPÄISCHE PATENTSCHRIFT**

(45) Veröffentlichungstag und Bekanntmachung des Hinweises auf die Patenterteilung:
**08.03.2023   Patentblatt 2023/10**

(21) Anmeldenummer: **19151107.0**

(22) Anmeldetag: **10.01.2019**

(51) Internationale Patentklassifikation (IPC):
**F24F 3/16** *(2006.01)*      **F24F 12/00** *(2006.01)*

(52) Gemeinsame Patentklassifikation (CPC):
**F24F 12/001; F24F 8/192; F24F 8/194;** Y02A 50/20; Y02B 30/56

(54) **HAUSLÜFTUNGSVORRICHTUNG UND VERFAHREN ZUM BETREIBEN EINER HAUSLÜFTUNGSVORRICHTUNG**

DOMESTIC VENTILATION DEVICE AND METHOD FOR OPERATING SAME

DISPOSITIF D'AÉRATION MÉNAGER ET PROCÉDÉ DE FONCTIONNEMENT D'UN DISPOSITIF D'AÉRATION MÉNAGER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.01.2018   DE 102018201041**

(43) Veröffentlichungstag der Anmeldung:
**31.07.2019   Patentblatt 2019/31**

(73) Patentinhaber: **BSH Hausgeräte GmbH
81739 München (DE)**

(72) Erfinder:
• **Herbst, Jens
75015 Bretten (DE)**
• **Merzkirch, Alexander
70565 Stuttgart (DE)**

(56) Entgegenhaltungen:
WO-A1-2015/049297      CH-A- 158 749
DE-A1-102016 100 551      US-A- 6 164 082

**Beschreibung**

Die vorliegende Erfindung betrifft eine Hauslüftungsvorrichtung sowie ein Verfahren zum Betreiben einer Hauslüftungsvorrichtung.

Hauslüftungsanlagen dienen zu einer regulierten Zu- und Abluftführung zwischen Wohnräumen und Umgebung. Neben zentralen Hauslüftungsanlagen werden ebenfalls kleine dezentrale Systeme eingesetzt, die direkt in einer Hauswand installiert werden und als Mauerlüfterkasten bezeichnet werden.

Um bei dezentralen, in die Wand eingelassenen Lüfterbausteinen den Wärmeverlust von Luft, die von dem Wohnraum nach außen in die Umgebung strömt, zu reduzieren, ist es bekannt keramische Wärmetauscher einzusetzen. Zudem muss der Eintritt von Verunreinigungen, wie Insekten, Pollen und/oder Feinstaub von der Umgebung in den Wohnraum verhindert werden. Hierzu können Insektenfilter, Pollen- und/oder Feinstaubfilter verwendet werden. Diese können beispielsweise aus Vlies bestehen. Zudem sind bei der Hausbelüftung elektrostatische Filter bekannt, bei denen Partikel elektrisch aufgeladen und an Elektroden abgeschieden werden.

In der WO 2015/049 297 A1 ist ein Luftreinigungsgerät beschrieben, das unter anderem einen ersten und einen zweiten Luftkanal aufweist, wobei ein Elektrofilter/Ozongenerator im ersten Luftkanal angeordnet ist und ein Wärmetauscher angeordnet ist, um Wärme zwischen dem ersten und dem zweiten Luftkanal zu tauschen.

In der CH 158749 A werden ein Verfahren und eine Anlage zum Entnebeln von feuchten Räumen in Färbereien, Bleichereien und dergleichen beschrieben. In der Anlage sind zu diesem Zweck Niederschlagselektroden und Sprühelektroden vorgesehen.

In der GB 2 361 991 A ist eine Wärmerückgewinnungseinheit beschrieben. Die Einheit weist einen Stapel von Aluminiumplatten auf, die so angeordnet sind, dass warme Luft zwischen benachbarten Paaren von Platten in eine Richtung und kalte Luft in einer orthogonalen Richtung zwischen anderen Paaren von Platten fließt. Die Einheit kann weiterhin ein Gebläse und einen Filter aufweisen.

In der US 6,164,082 A ist eine Klimaanlage mit Reiniger beschrieben. In der Klimaanlage ist ein Staubfilter in einer Luftführung hinter einem Wärmetauscher angeordnet. Der Staubfilter weist eine staubsammelnde Elektrode auf, die mit einem Heizelement zur Selbstreinigung verbunden ist.

Aus der DE 10 2016 100 551 A1 ist eine Filteranordnung für eine dezentrale Wohnraumbelüftungsanlage beschrieben, bei der in einem Luftkanal ein Elektroabscheider vorgesehen ist und in dem Abschnitt des Elektroabscheiders zumindest ein von dem Luftstrom angeströmtes Wärmespeicherelement vorgesehen ist, das in dem Elektroabscheider räumlich verschränkt ist.

Ein Nachteil dieser Wohnraumbelüftungsanlage besteht darin, dass die Wartung aufwendig ist.

Der Erfindung liegt somit die Aufgabe zugrunde eine Hauslüftungsvorrichtung zu schaffen, die zumindest diesen Nachteil verringert oder behebt.

Gemäß einem ersten Aspekt wird die Aufgabe gelöst durch eine Hauslüftungsvorrichtung mit den Merkmalen des Anspruchs 1.

Die Hauslüftungsvorrichtung wird im Folgenden auch als Hauslüftungssystem bezeichnet und stellt eine dezentrale Hauslüftungsvorrichtung dar. Das Gebläse wird auch als Lüfter bezeichnet. Die Filtereinheit ist bei der erfindungsgemäßen Hauslüftungsvorrichtung eine elektrostatische Filtereinheit. Diese Filtereinheit umfasst eine Abscheideeinheit und eine Ionisationseinheit. Die notwendige Ionisationseinheit kann weiterhin einen Insektenschutz beinhalten, um eine Fehlfunktion der Ionisationseinheit aufgrund von Kurzschlüssen zu vermeiden.

Die Abscheideeinheit weist erfindungsgemäß Abscheideelemente auf. Die Abscheideelemente sind vorzugsweise plattenförmige Elektroden. Hierbei sind die plattenförmigen Elektroden bezüglich ihrer Ladung so alternierend angeordnet, dass sich zwischen diesen ein elektrisches Feld ausbildet. Hierdurch erfolgt eine Abscheidung von geladenen Partikeln an den Abscheideelementen, die in einem Luftstrom durch die Abscheideeinheit strömen.

Die Abscheideelemente der Abscheideeinheit ist erfindungsgemäß als Wärmetauscher in der Hauslüftungsvorrichtung ausgelegt. Dies bedeutet, dass sich an den Abscheideelementen ein Wärmestrom von wärmerer Luft, die durch die Abscheideeinheit strömt, zu den Abscheideelementen einstellt und die aus der Luft an die Abscheideelemente abgegebene Wärme kann in den Abscheideelementen gespeichert werden.

Indem erfindungsgemäß die Abscheideelemente, die zum Ausfiltern von Partikeln aus einem Luftstrom dienen, zusätzlich auch als Wärmetauscher fungieren, kann eine Reihe von Vorteilen erzielt werden.

Da bei der erfindungsgemäßen Filtereinheit somit im Gegensatz zum Stand der Technik keine zusätzlichen Wärmespeicherelemente, die verschränkt angeordnet sind, notwendig sind, kann die Anordnung der Abscheideelemente, das heißt der Elektroden, sowie deren Länge und Dicke frei gewählt werden. Insbesondere können die Plattendicke, die Plattenlänge und die Versperrung, das heißt das Verhältnis von offener Fläche zu verdeckter Fläche der plattenförmigen Abscheideelemente in der Abscheideeinheit so eingestellt werden, dass eine möglich große Wärmekapazität der Abscheideelemente erzielt werden kann. Zudem kann durch die Verwendung der Abscheideelemente als Wärmetauscher ein Nachteil des Standes der Technik behoben werden. Die Wärmespeicherelemente nach dem Stand der Technik bestehen nämlich vorzugsweise aus keramischem Werkstoff. Da diese Wärmespeicherelemente in dem Elektroabscheider vorgesehen sind, werden sich Partikel, die in dem Elektroabscheider abgeschieden werden, auch in die sehr feinen Poren des keramischen Werkstoffes absetzen, was die Wartung erschwert. Bei der vorliegenden Erfindung dienen die Abscheideelemente, die beispielsweise aus Metall bestehen können als Wärmespeicher. Da diese Abscheideelemente in der Regel eine glatte Oberfläche aufweisen, ist die Wartung vereinfacht. Insbesondere kann die Abscheideeinheit gegebenenfalls in einer Spülmaschine gereinigt werden, was bei einem Elektroabscheider mit keramischen Bestandteilen nicht möglich ist.

Erfindungsgemäß bestehen die Abscheideelemente der Abscheideeinheit aus einem Material hoher spezifischer Wärmekapazität von mindestens 750 J / kg K. Gemäß einer Ausführungsform bestehen die Abscheideelemente der Abscheideeinheit aus einem Material hoher spezifischer Wärmekapazität von mindestens 800 J / kg K und vorzugsweise mindestens 900 J / kg K. Indem die elektrisch leitenden Abscheideelemente aus einem Material hoher spezifischer Wärmekapazität hergestellt sind, kann die Wärmemenge, die von diesen gespeichert werden kann gegenüber herkömmlichen Abscheideelementen gesteigert werden.

Zusätzlich wird die Wärmekapazität der Abscheideeinheit durch die Abmessungen der Abscheideelemente und deren relative Anordnung zueinander die Wärmekapazität der Abscheideeinheit eingestellt. Insbesondere kann durch geeignete Variation der Dicke der Abscheideelemente, der Länge der Abscheideelemente und der Versperrung, das heißt dem Verhältnis der offenen Fläche im Querschnitt der Abscheideeinheit zu der verdeckten Fläche, die Wärmekapazität gezielt eingestellt werden. Die Wärmekapazität kann dabei durch die Variation und gegebenenfalls Materialwahl so eingestellt werden, dass diese eine ähnliche Wärmekapazität erreicht, wie bei herkömmlichen keramischen Wärmetauschern.

Gemäß einer bevorzugten Ausführungsform bestehen die Abscheideelemente aus einem nicht-porösen Material. Diese Ausführungsform weist den Vorteil auf, dass Partikel, die sich an den Abscheideelementen abscheiden auf einfache Weise wieder von diesen entfernt werden können.

Erfindungsgemäß weist die Hauslüftungsvorrichtung mindestens ein zu der Filtereinheit separates Wärmetauschermodul auf. Das Wärmetauschermodul besteht vorzugsweise aus keramischem Material. Das Wärmetauschermodul kann beispielsweise ein Plattenwärmetauscher oder Rohrwärmetauscher sein. Die Filtereinheit ist zu dem Wärmetauschermodul als separates Modul ausgeführt. Als separates Modul wird hierbei eine Einheit bezeichnet, die vormontierbar ist und separat zu dem Wärmetauschermodul in die Hauslüftungsvorrichtung eingebracht und aus dieser entnommen werden kann. Die Filtereinheit kann beispielsweise ein Gehäuse aufweisen, in dem die Ionisationseinheit und die Abscheideeinheit aufgenommen sind und das separat zu dem Wärmetauschermodul in die Hauslüftungsvorrichtung eingebracht werden kann. Die Filtereinheit liegt vorzugsweise benachbart zu dem Wärmetauschermodul und kann an dem Wärmetauschermodul anliegen.

Indem die Filtereinheit eine elektrostatische Filtereinheit und ein zu dem Wärmetauschermodul separates Modul darstellt, kann eine Reihe von Vorteilen erzielt werden. Zum einen ist durch den modularen Aufbau der Hauslüftungsvorrichtung die Wartung erleichtert. Insbesondere kann die Filtereinheit separat von dem Wärmetauschermodul aus der Hauslüftungsvorrichtung entnommen und gegebenenfalls in einer Spülmaschine gereinigt werden. Dies ist bei einem Elektroabscheider mit räumlich verschränkt angeordneten Wärmespeicherelementen nicht möglich. Zudem kann die Filtereinheit bei der erfindungsgemäßen Hauslüftungsvorrichtung einen einfachen und damit kostengünstigeren Aufbau aufweisen als ein Elektroabscheider mit räumlich verschränkt angeordneten Wärmespeicherelementen. Hierbei kann die Filtereinheit sowohl nach strömungstechnischen als auch nach wärmetechnischen Aspekten ausgelegt werden. Schließlich kann bei dem modularen Aufbau der Hauslüftungsvorrichtung falls gewünscht, die Filtereinheit durch den Benutzer entnommen und durch einen weiteren Wärmetauschermodule ersetzt werden.

Entsprechend der zu erreichenden Abscheideeffizienz, der Wahl der Betriebsspannung sowie der geometrischen Abstände der Abscheideeinheit ergibt sich physikalisch eine notwendige Länge $l_{Abscheideeinheit}$ der Abscheideeinheit. Es ergibt sich dadurch eine mögliche Länge des zusätzlichen keramischen Wärmetauschermoduls mit

$$L_{keramisches\ Wärmetauschermodul} = l_{insgesamt} - l_{Abscheideeinheit}$$

Die insgesamte Länge stellt den Bauraum dar, der durch die Dicke der Hauswand beschränkt ist. Hauswände weisen üblicherweise eine Dicke von 285mm auf.

Das mindestens eine Wärmetauschermodul ist vorzugsweise zwischen dem Gebläse und der Filtereinheit angeordnet. Das Gebläse ist bei dieser Ausführungsform dem Wohnraum beziehungsweise Innenraum des Hauses zugewandt. Indem das Wärmetauschermodul zwischen der Filtereinheit und dem Gebläse angeordnet ist, wird bei einem Betrieb der Hauslüftungsvorrichtung im Zuluftbetrieb, der Luftstrom in der Filtereinheit gereinigt, bevor dieser das Wärmetauschermodul und das Gebläse erreicht. Ein Zusetzen des Wärmetauschermoduls und des Gebläses beispielsweise durch Staub oder Pollen kann damit verhindert werden. Insbesondere das Verhindern des Zusetzens des Wärmetauschermoduls durch das Vorschalten des Moduls der Filtereinheit kann bei dem bekannten Elektroabscheider mit räumlich verschränkt angeordneten Wärmespeicherelementen nicht bewirkt werden.

Das mindestens eine Wärmetauschermodul, das beispielsweise einen Plattenwärmetauscher oder Rohrwärmetauscher darstellen kann, kann vorzugsweise aus keramischem Werkstoff bestehen. Es liegt allerdings auch im Rahmen der Erfindung, dass das Wärmetauschermdoul aus einem anderen Material mit hoher spezifischer Wärmekapazität (cp) bestehen. In der folgenden Tabelle wird die spezifische Wärmekapazität von Aluminium und keramischen Werkstoffen, die für das Wärmetauschermodul verwendet werden können, angegeben:

| Material | Spez. Wärmekapazität [J/ kg K] |
|---|---|
| Aluminium (25°C) | 920 |
| C120 (25-600°C) | 750 - 900 |
| C220/C221 (25-600°C) | 800 - 900 |

Wobei C120 und C220/C221 Bezeichnungen nach DIN EN 60672 sind, nach der C120 Tonerdeporzellane und C220/211 Steatit ist.

Die Filtereinheit umfasst erfindungsgemäß eine Ionisationseinheit und eine Abscheideeinheit und die Abscheideeinheit ist zwischen der Ionisationseinheit und dem Wärmetauschermodul angeordnet.

Gemäß einer bevorzugten Ausführungsform ist das Gebläse ein reversibles Gebläse und die Filtereinheit ist elektrisch mit der Steuerung des Gebläses verbunden. Als reversibles Gebläse wird hierbei ein Gebläse bezeichnet, das eine Luftströmung in entgegengesetzte Richtungen erzeugen kann. Insbesondere kann durch das reversible Gebläse zum einen ein Luftstrom in der Hauslüftungsvorrichtung erzeugt werden, der zu dem Wohnraum hin gerichtet ist, und zum anderen ein Luftstrom, der zu dem Umgebung hin gerichtet ist. Indem die Filtereinheit elektrisch mit der Steuerung des Gebläses verbunden ist, kann bei einer Luftströmung, bei der durch das Gebläse Außenluft in den Innenraum eingesaugt wird, die Filtereinheit aktiviert werden. Hierdurch können Verunreinigungen aus der Außenluft, wie beispielsweise Pollen, Feinstaub und dergleichen in der Filtereinheit, insbesondere in der Abscheideeinheit an den Abscheideelementen, ausgefiltert werden. Wird das Gebläse hingegen so betrieben, dass dieses Innenluft nach außen durch die Hauslüftungsvorrichtung abgibt, kann die Filtereinheit gezielt deaktiviert werden. Dadurch kann die ausströmende Luft Verunreinigungen von der Abscheideeinheit und insbesondere den Abscheideelementen weg tragen und die Filtereinheit damit reinigen. Hierdurch wird eine Selbstreinigung der Filtereinheit erzielt. Durch diese Selbstreinigung wird auch die durch abgeschiedene Verunreinigungen eventuell verschlechterte Wärmeübertragung von Luft an die Abscheideelemente wieder verbessert.

Gemäß einer Ausführungsform weist die Hauslüftungsvorrichtung Verbindungsmittel zum lösbaren Verbinden zumindest der Filtereinheit mit mindestens einem Wärmetauscher auf. Die Verbindungsmittel können im einfachsten Fall ein Kanalelement darstellen, in das die Filtereinheit und der Wärmetauscher eingebracht, insbesondere eingeschoben werden können. Dadurch kann die relative Position der Filtereinheit zu dem Wärmetauscher durch das Kanalelement festgelegt werden. Die einzelnen Module, insbesondere die Filtereinheit kann dabei getrennt von dem Wärmetauscher aus dem Kanalelement entnommen und gegebenenfalls gereinigt werden. Alternativ ist es aber auch möglich, dass an der Filtereinheit und/oder dem Wärmetauscher Verbindungsmittel, wie Rastvorrichtungen und Rastöffnungen vorgesehen sind, mittels derer die Module miteinander lösbar verbunden werden können.

Gemäß einem weiteren Aspekt betrifft die Erfindung ein Verfahren zum Betreiben einer erfindungsgemäßen Hauslüftungsvorrichtung. Das Verfahren ist dadurch gekennzeichnet, dass die Filtereinheit in Abhängigkeit des Betriebszustandes des Gebläses betrieben wird.

Merkmale und Vorteile, die bezüglich der Hauslüftungsvorrichtung beschrieben werden, gelten - soweit anwendbar - entsprechend für das erfindungsgemäße Verfahren und umgekehrt und werden daher gegebenenfalls nur einmalig beschrieben.

Durch das Betreiben der Filtereinheit in Abhängigkeit des Betriebszustandes des Gebläses kann der oben beschriebene Selbstreinigungseffekt erzielt werden. Insbesondere kann die Filtereinheit bei Umkehr der Förderrichtung des Gebläses deaktiviert werden.

Die vorliegende Erfindung wird nun erneut unter Bezugnahme auf die beiliegenden Zeichnungen erläutert. Es zeigen:

Figur 1: eine schematische Explosionsansicht einer Ausführungsform der erfindungsgemäßen Hauslüftungsvorrichtung;

Figur 2: Eine schematische Darstellung der Ausführungsform der Hauslüftungsvorrichtung gemäß Figur 1 im montierten Zustand;

Figur 3: eine schematische, perspektivische Ansicht einer Ausführungsform einer Abscheideeinheit einer erfindungsgemäßen Hauslüftungsvorrichtung; und

Figur 4: eine schematische Prinzipdarstellung der Funktionen einer Ausführungsform der Abscheideeinheit einer erfindungsgemäßen Hauslüftungsvorrichtung.

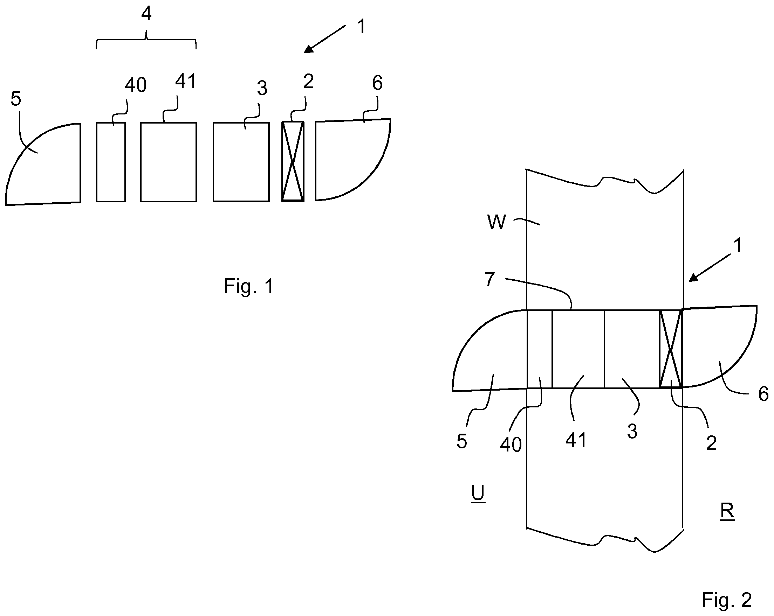

In Figur 1 sind die Hauptkomponenten einer Ausführungsform einer erfindungsgemäßen Hauslüftungsvorrichtung 1 schematisch gezeigt. Die Hauslüftungsvorrichtung 1 weist ein Gebläse 2, ein Wärmetauschermodul 3 sowie eine Filtereinheit 3 auf. Die Filtereinheit 3 ist eine elektrostatische Filtereinheit 3. In der dargestellten Ausführungsform besteht die Filtereinheit 3 daher aus einer Ionisationseinheit 40 und einer Abscheideeinheit 41. Zudem weist die Hauslüftungsvorrichtung 1 zwei Zuluft-/Abluftstutzen 5, 6 auf, wobei einer an der Seite der Hauslüftungsvorrichtung 1 angeordnet ist, die der Umgebung zugewandt ist und der andere an der Seite der Hauslüftungsvorrichtung 1 angeordnet ist, die dem Innenraum zugewandt ist. Zusätzlich kann ein Insektenschutz (nicht gezeigt) an der, der äußeren Umgebung zugewandten Seite der Hauslüftungsvorrichtung 1 vorgesehen sein.

In Figur 2 ist die Ausführungsform der Hauslüftungsvorrichtung 1 im montierten Zustand gezeigt. In diesem Zustand sind das Gebläse 2, das Wärmetauschermodul 3 sowie die Filtereinheit 3 in einem Lüftungskanal 7 in einer Hauswand W angeordnet. Von dem Innenraum R aus liegt zuerst das Gebläse 2, danach das Wärmetauschermodul 3 und schließlich die Filtereinheit 4 in dem Lüftungskanal 7. Zu dem Innenraum R ist vor dem Gebläse 2 der Zuluft-/Abluftstutzen 6 angeordnet. Zu der Umgebung U ist nach der Filtereinheit 4 der Zuluft-/Abluftstutzen 5 angeordnet. Die Filtereinheit 4 ist in dem Lüftungskanal 7 so ausgerichtet, dass die Ionisationseinheit 40 der Umgebung U zugewandt ist und die Abscheideeinheit 41 nach der Ionisationseinheit 40 in dem Lüftungskanal 7 liegt.

Das Wärmetauschermodul 3 ist zwischen dem Gebläse 2 und der Filtereinheit 4 angeordnet.

In der Ionisationseinheit 40 werden Partikel elektrisch geladen. Dazu können ein Ionisationsdraht (nicht gezeigt) und mindestens eine Gegenelektrode (nicht gezeigt) in der Ionisationseinheit 40 vorgesehen sein.

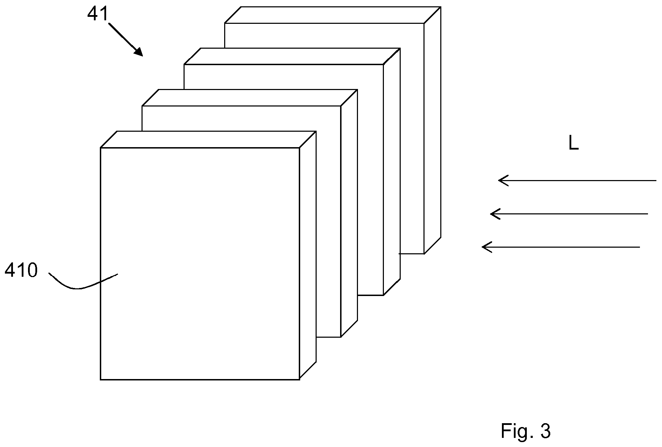

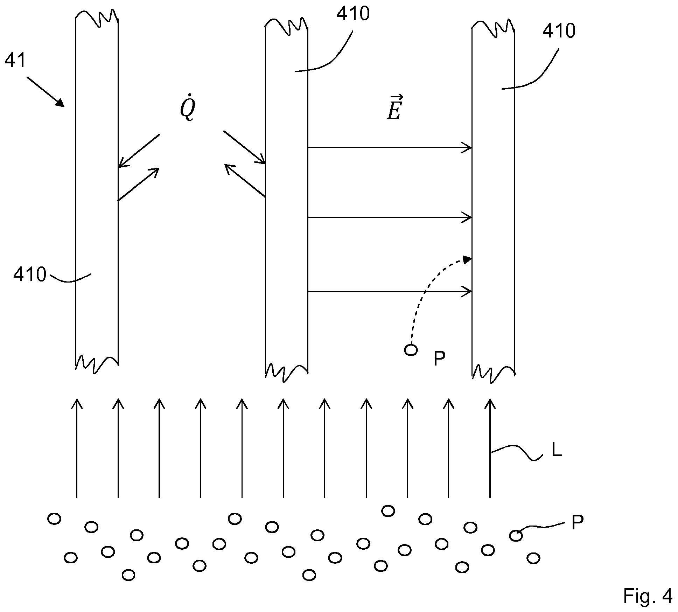

In den Figuren 3 und 4 ist die Funktionsweise der Abscheideeinheit 41 der Filtereinheit 4 schematisch gezeigt. In der Abscheideeinheit 41 sind Abscheideelemente 410 angeordnet. Diese stellen vorzugsweise parallele elektrisch leitende Platten dar, die auch als Abscheideelektroden bezeichnet werden können. Aufgrund der unterschiedlichen Ladung, die an benachbarten Abscheideelementen 410 angelegt wird, baut sich ein elektrisches Feld $\vec{E}$ auf. Die Abscheideelemente 410 sind so in der Abscheideeinheit 41 angeordnet, dass diese zu einem Luftstrom L, der die Abscheideeinheit 41 durchströmt parallel liegen. Dies ist in Figur 3 schematisch gezeigt.

Wird die Filtereinheit 4 so von Luft durchströmt, dass die Luft zuerst durch die Ionisationseinheit 40 strömt, werden in dieser Ionisationseinheit 40 Partikel P, die in dem Luftstrom L enthalten sind, aufgeladen. Diese geladene Partikel P werden durch das in der Abscheideeinheit 41 bestehende elektrisches Feld $\vec{E}$ quer zur Durchströmungsrichtung beschleunigt und prallen nach einer Zeit t und einer Weglänge s auf eines von zwei benachbarten Abscheideelemente 410.

Da erfindungsgemäß die Abscheideelemente 410 zusätzlich zu deren elektrischen Leitfähigkeit auch eine hohe Wärmekapazität aufweisen, kann zusätzlich zu der Abscheidung von Verunreinigungen an den Abscheideelementen 410 auch Wärme von dem Luftstrom L an die Abscheideelemente 410 abgegeben werden. In Figur 4 ist das kombinierte Wirkprinzip der erfindungsgemäßen Filtereinheit schematisch visualisiert. In der Figur 4 sind nur drei Abscheideelemente 410 schematisch gezeigt. Die Abscheideeinheit 41 weist aber vorzugsweise mehr Abscheideelemente 410 auf. Zwischen den beiden rechten Abscheideelementen 410 der Figur 4 ist das Prinzip der Abscheidung aufgrund des elektrischen Feldes und zwischen den beiden linken Abscheideelementen 410 das Prinzip der Wärmeübertragung schematisch gezeigt. Diese beiden Prinzipien treten aber gemeinsam auf, das heißt zwischen zwei benachbarten Abscheideelementen 410 liegt sowohl ein elektrisches Feld vor, aufgrund dessen eine Abscheidung von Partikeln erfolgt als auch eine Wärmeübertragung zwischen der Luft und den Abscheideelementen 410. Dies bedeutet, dass mit dem Eintritt der geladenen Partikel P, die auch als Teilchen bezeichnet werden können, in das elektrische Feld $\vec{E}$ die Partikel P abgelenkt und gefiltert werden. Gleichzeitig findet durch den fließenden Volumenstrom der Luft eine erzwungene Konvektion zwischen der Luft, das heißt dem Fluid und den Abscheideelementen 410, das heißt den Platten, statt und ein Wärmestrom $\dot{Q}$ stellt sich ein.

Mit der vorliegenden Erfindung kann ein optimaler Kompromiss zwischen dem Druckverlust, der Filtereffizienz der Filtereinheit, das heißt des Elektrostatik-Filters und der Gesamt-Wärmekapazität der Hauslüftungsvorrichtung eingestellt werden.

Ein erheblicher technischer Vorteil liegt darin, dass, wenn ein keramisches Wärmetauschermodul vorgesehen ist, eine Verschmutzung der sehr feinen Poren dieses keramischen Wärmetauschermoduls verhindert werden kann, da diesem Wärmetauschermodul vorzugsweise die Filtereinheit vorgeschaltet ist.

Die Hauslüftungsvorrichtung ist modular aufgebaut, so dass die einzelnen Module und insbesondere die Filtereinheit, einzeln entnehmbar sind. Hierdurch wird dem Kunden - unabhängig von einer gewissen Selbstreinigung der Filtereinheit - die Reinigung der Filtereinheit beispielsweise in eine Spülmaschine ermöglicht.

Erfindungsgemäß kann je nach der technisch notwendigen Länge der Abscheideeinheit, auch eine Kombinationslösung von keramischem Wärmetauscher mit der Verwendung einer elektrostatischen Abscheideeinheit eingesetzt werden. Dadurch können die Funktionen des Gesamtgerätes optimiert werden sowie die Kosten gesenkt werden.

Mit der vorliegenden Erfindung kann gezielt ein sehr wartungsarmes Filterkonzept für dezentrale Lüftungsvorrichtungen, insbesondere dezentraler Raumluft-Lüfterkästen, erreicht werden. Da insbesondere durch die Selbstreinigung des Filters das Intervall für eine Reinigung in der Spülmaschine erhöht werden kann.

Bei der vorliegenden Erfindung kann ein guter Wärmeübergang $\alpha$ an den Abscheideelementen und eine möglichst hohe spezifische Wärmekapazität cp der Abscheideelemente genutzt werden. Durch eine hinreichende Masse der Abscheideelemente kann dabei eine definierte Wärmemenge Q[W] gespeichert werden. Gleichzeitig kann der Druckverlust der Struktur der Abscheideeinheit hinreichend gering sein, damit noch die für die Lüftung notwendige Luft-Fördermenge [m$^3$/h] erreicht werden kann.

Bei der vorliegenden Erfindung wird Funktionskombination eines Wärmetauschers mit der Abscheideeinheit eines elektrostatischen Parktikelfilters, der Filtereinheit bezeichnet ist, genutzt. Hierbei wird die Tatsache genutzt, dass der Aufbau einer Abscheideeinheit einer elektrostatischen Filtereinheit rein mechanisch mit dem Aufbau eines klassischen Wärmetauschers aus Keramik artverwandt ist. Insbesondere weist die elektrostatische Abscheideeinheit durch ihre vorzugsweise vorliegende Plattenstruktur ebenfalls gute Eigenschaften als Wärmetauscher auf.

Ein Vorteil der Erfindung ist die Verwendung einer elektrostatischen Filtereinheit als Feinstaubfiltern, je nach Volumenstrom und Bauraumverfügbarkeit bis in den HEPA-Bereich.

Durch die vorzugsweise mögliche reversible Luftführung kann die Filtereinheit wartungsärmer arbeiten als heutige Filtersysteme, was ein Eingreifen durch den Benutzer seltener erforderlich macht. Sollte eine Reinigung seitens des Benutzers erforderlich sein, kann durch die modulare Konstruktion die elektrostatische Filtereinheit entnommen werden und in der Spülmaschine gereinigt werden.

Der Druckverlust der erfindungsgemäß verwendeten elektrostatischen Filtereinheit gegenüber konventionellen Vlies HEPA Filtern ist wesentlich geringer, was trotz der Erhöhung der Filtereffizienz zu einer Verringerung der Geräuschentwicklung führt.

## Bezugszeichen

1     Hauslüftungsvorrichtung
2     Lüfter
3     Wärmetauschermodul

4     Filtereinheit
40    Ionisationseinheit
41    Abscheideeinheit
410   Abscheideelemente

5     Zuluft- / Abluftstutzen

6     Zuluft- / Abluftstutzen

7     Lüftungskanal

R    Innenraum
U    Umgebung
W   Hauswand
L    Luftstrom
P    Partikel

## Patentansprüche

1. Hauslüftungsvorrichtung umfassend ein Gebläse (2) und mindestens eine Filtereinheit (4) für Verunreinigungen, die eine elektrostatische Filtereinheit (4) mit einer Abscheideeinheit (41) mit mindestens zwei elektrisch leitendenden Abscheideelementen (410) darstellt, wobei

   die Abscheideelemente (410) der Abscheideeinheit (41) als Wärmetauscher in der Hauslüftungsvorrichtung (1) ausgelegt sind, wobei
   die Abscheideelemente (410) der Abscheideeinheit (41) aus einem Material hoher spezifischer Wärmekapazität von mindestens 750 J / kg K bestehen, wobei die Hauslüftungsvorrichtung (1) mindestens ein zu der Filtereinheit (4) separates Wärmetauschermodul (3) aufweist, wobei die Filtereinheit (4) eine Ionisationseinheit (40) und eine Abscheideeinheit (41) umfasst und wobei die Abscheideeinheit (41) zwischen der Ionisationseinheit (40) und dem mindestens einen Wärmetauschermodul (3) angeordnet ist.

2. Hauslüftungsvorrichtung nach Anspruch 1, **dadurch gekennzeichnet, dass** die Abscheideelemente (410) der Abscheideeinheit (41) aus einem Material hoher spezifischer Wärmekapazität von mindestens 800 J / kg K, vorzugsweise mindestens 900 J / kg K bestehen.

3. Hauslüftungsvorrichtung nach einem der Ansprüche 1 oder 2, **dadurch gekennzeichnet, dass** durch die Abmessungen der Abscheideelemente (410) und deren relative Anordnung zueinander die Wärmekapazität der Abscheideeinheit (41) eingestellt ist.

4. Hauslüftungsvorrichtung nach einem der Ansprüche 1 bis 3, **dadurch gekennzeichnet, dass** die Abscheideelemente (410) aus einem nicht-porösen Material bestehen.

5. Hauslüftungsvorrichtung nach einem der Ansprüche 1 bis 4, **dadurch gekennzeichnet, dass** das Wärmetauschermodul (3) aus keramischem Material besteht.

6. Hauslüftungsvorrichtung nach einem der Ansprüche 1 bis 5, **dadurch gekennzeichnet, dass** das mindestens eine Wärmetauschermodul (3) zwischen dem Gebläse (2) und der Filtereinheit (4) angeordnet ist.

7. Hauslüftungsvorrichtung nach einem der Ansprüche 1 bis 6, **dadurch gekennzeichnet, dass** das Gebläse (2) ein reversibles Gebläse ist und die Filtereinheit (4) elektrisch mit der Steuerung des Gebläses (2) verbunden ist.

8. Hauslüftungsvorrichtung nach einem der Ansprüche 1 bis 7, **dadurch gekennzeichnet, dass** die Hauslüftungsvorrichtung (1) Verbindungsmittel zum lösbaren Verbinden zumindest der Filtereinheit (4) mit mindestens einem Wärmetauscher (3) aufweist.

9. Verfahren zum Betreiben einer Hauslüftungsvorrichtung (1) gemäß einem der Ansprüche 1 bis 8, **dadurch gekennzeichnet, dass** die Filtereinheit (4) in Abhängigkeit des Betriebszustandes des Gebläses (2) betrieben wird.

10. Verfahren nach Anspruch 9, **dadurch gekennzeichnet, dass** die Filtereinheit (4) bei Umkehr der Förderrichtung des Gebläses (2) deaktiviert wird.

**Claims**

1. Household ventilation device comprising a blower (2) and at least one filter unit (4) for contaminants, which represents an electrostatic filter unit (4) with a precipitation unit (41) with at least two electrically conductive precipitation elements (410), wherein

   the precipitation elements (410) of the precipitation unit (41) are designed as a heat exchanger in the household ventilation device (1), wherein
   the precipitation elements (410) of the precipitation unit (41) consist of a material with a high specific thermal capacity of at least 750 J / kg K, wherein
   the household ventilation device (1) has at least one heat exchanger module (3) separate from the filter unit (4), wherein
   the filter unit (4) comprises an ionisation unit (40) and a precipitation unit (41) and wherein
   the precipitation unit (41) is arranged between the ionisation unit (40) and the at least one heat exchanger module (3).

2. Household ventilation device according to claim 1, **characterised in that** the precipitation elements (410) of the precipitation unit (41) consist of a material with a high specific thermal capacity of at least 800 J / kg K, preferably at least 900 J / kg K.

3. Household ventilation device according to one of claims 1 or 2, **characterised in that** the thermal capacity of the precipitation unit (41) is set by the dimensions of the precipitation elements (410) and their arrangement relative to one another.

4. Household ventilation device according to one of claims 1 to 3, **characterised in that** the precipitation elements (410) consist of a non-porous material.

5. Household ventilation device according to one of claims 1 to 4, **characterised in that** the heat exchanger module (3) consists of ceramic material.

6. Household ventilation device according to one of claims 1 to 5, **characterised in that** the at least one heat exchanger module (3) is arranged between the blower (2) and the filter unit (4).

7. Household ventilation device according to one of claims 1 to 6, **characterised in that** the blower (2) is a reversible blower and the filter unit (4) is electrically connected to the controller of the blower (2).

8. Household ventilation device according to one of claims 1 to 7, **characterised in that** the household ventilation device (1) has connection means for the detachable connection at least of the filter unit (4) to at least one heat exchanger (3).

9. Method for operating a household ventilation device (1) in accordance with one of claims 1 to 8, **characterised in that** the filter unit (4) is operated as a function of the operating state of the blower (2).

10. Method according to claim 9, **characterised in that** the filter unit (4) is deactivated when the direction of delivery of the blower (2) is reversed.

## Revendications

1. Dispositif d'aération domestique comprenant un ventilateur (2) et au moins un ensemble de filtre (4) pour des impuretés, qui constitue un ensemble de filtre électrostatique (4) comprenant une unité de séparation (41) comportant au moins deux éléments de séparation (410) électriquement conducteurs,

   dans lequel les éléments de séparation (410) de l'unité de séparation (41) sont conçus sous forme d'échangeurs de chaleur dans le dispositif d'aération domestique (1),
   dans lequel les éléments de séparation (410) de l'unité de séparation (41) sont constitués d'un matériau présentant une haute capacité thermique spécifique d'au moins 750 J / kg K,
   dans lequel le dispositif d'aération domestique (1) comprend au moins un module d'échangeur de chaleur (3) séparé de l'ensemble de filtre (4),
   l'ensemble de filtre (4) comprend une unité d'ionisation (40) et une unité de séparation (41), et
   l'unité de séparation (41) est disposée entre l'unité d'ionisation (40) et l'au moins un module d'échangeur de chaleur (3).

2. Dispositif d'aération domestique selon la revendication 1, **caractérisé en ce que** les éléments de séparation (410) de l'unité de séparation (41) sont constitués d'un matériau présentant une haute capacité thermique spécifique d'au moins 800 J / kg K, de préférence d'au moins 900 J / kg K.

3. Dispositif d'aération domestique selon l'une des revendications 1 ou 2, **caractérisé en ce que** la capacité thermique de l'unité de séparation (41) est réglée par les dimensions des éléments de séparation (410) et leur agencement relatif l'un par rapport à l'autre.

4. Dispositif d'aération domestique selon l'une des revendications 1 à 3, **caractérisé en ce que** les éléments de séparation (410) sont constitués d'un matériau non poreux.

5. Dispositif d'aération domestique selon l'une des revendications 1 à 4, **caractérisé en ce que** le module d'échangeur de chaleur (3) est constitué d'un matériau de céramique.

6. Dispositif d'aération domestique selon l'une des revendications 1 à 5, **caractérisé en ce que** l'au moins un module d'échangeur de chaleur (3) est disposé entre le ventilateur (2) et l'ensemble de filtre (4).

7. Dispositif d'aération domestique selon l'une des revendications 1 à 6, **caractérisé en ce que** le ventilateur (2) est un ventilateur réversible et l'ensemble de filtre (4) est relié électriquement à la commande du ventilateur (2).

8. Dispositif d'aération domestique selon l'une des revendications 1 à 7, **caractérisé en ce que** le dispositif d'aération domestique (1) comprend des moyens d'attache pour relier de façon détachable l'au moins un ensemble de filtre (4) à l'au moins un échangeur de chaleur (3).

9. Procédé de fonctionnement d'un dispositif d'aération domestique (1) selon l'une des revendications 1 à 8, **caractérisé en ce que** l'ensemble de filtre (4) est activé en fonction de l'état de fonctionnement du ventilateur (2).

10. Procédé selon la revendication 9, **caractérisé en ce que** l'ensemble de filtre (4) est désactivé lors de l'inversion du sens d'écoulement du ventilateur (2).

Fig. 2

Fig. 1

Fig. 3

Fig. 4

EP 3 517 846 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015049297 A1
- CH 158749 A
- GB 2361991 A
- US 6164082 A
- DE 102016100551 A1